(19) Europäisches Patentamt
European Patent Office
Office européen des brevets

(11) **EP 4 187 483 A1**

(12) **EUROPEAN PATENT APPLICATION**

(43) Date of publication:
**31.05.2023 Bulletin 2023/22**

(21) Application number: **22209621.6**

(22) Date of filing: **25.11.2022**

(51) International Patent Classification (IPC):
**G06T 5/00** (2006.01)     **G06T 7/73** (2017.01)
**G06V 10/00** (2022.01)     **G06V 20/00** (2022.01)

(52) Cooperative Patent Classification (CPC):
**G06T 5/006; G06T 7/73; G06V 10/00; G06V 20/00;**
G06T 2207/10012; G06T 2207/20016;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021   CN 202111421144
27.09.2022   KR 20220122436**

(71) Applicant: **Samsung Electronics Co., Ltd.
Gyeonggi-do 16677 (KR)**

(72) Inventors:
• **He, Bao
Beijing, 100028 (CN)**
• **Wang, Hao
Beijing, 100028 (CN)**
• **Kim, Jiyeon
16678 Suwon-si, Gyeonggi-do (KR)**
• **Chang, Hyun Sung
16678 Suwon-si, Gyeonggi-do (KR)**
• **Wang, Qiang
Beijing, 100028 (CN)**
• **Hong, Sunghoon
16678 Suwon-si, Gyeonggi-do (KR)**
• **Li, Weiming
Beijing, 100028 (CN)**

(74) Representative: **Grünecker Patent- und
Rechtsanwälte
PartG mbB
Leopoldstraße 4
80802 München (DE)**

(54) **APPARATUS AND METHOD WITH IMAGE PROCESSING**

(57)     A processor-implement method with image processing includes: generating a feature map of a first image and detecting a target region in the first image based on the feature map; correcting the detected target region; and processing an object corresponding to the target region, based on the corrected target region.

FIG. 1

**Description**

BACKGROUND

1. Field

The following description relates to a method and apparatus with image processing.

2. Description of Related Art

An entire image may be corrected before image processing to ensure an effect on processing an object, and then the object may be processed based on the image entirely corrected. For example, a fisheye image taken with a fisheye camera may include distinct distortion. A typical image processing method may correct the entire fisheye image before processing an object in the fisheye image, and then may process the object based on the entire image corrected (e.g., object recognition, segmentation, and pose estimation). However, in the typical image processing method, the object may be greatly stretched when the entire image is corrected, leading to a poor effect on processing the object and slow image processing.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, a processor-implement method with image processing includes: generating a feature map of a first image and detecting a target region in the first image based on the feature map; correcting the detected target region; and processing an object corresponding to the target region, based on the corrected target region.

The generating of the feature map of the first image may include generating one or more feature maps of the first image by extracting a feature of the first image from one or more scaled images of the first image; and the detecting of the target region in the first image may include detecting a target region in the first image based on the one or more feature maps.

The generating of the one or more feature maps of the first image by extracting the feature of the first image from the one or more scaled images may include generating a feature map at each of one or more scales by performing a convolution operation on each of the one or more scaled images with a convolutional neural network, and, for each of the one or more scaled images of the first image, the convolutional neural network may be configured to perform the convolution operation on each of one or more positions on the scaled image by using a convolution kernel corresponding to each of the one or more positions.

The generating of the feature map at each of the one or more scales by performing the convolution operation on each of the one or more scaled images with the convolutional neural network may include: determining a sampling position of the convolution kernel corresponding to each of the one or more positions on the one or more scaled images; and generating the feature map at each of the one or more scales by performing the convolution operation according to the sampling position of the convolution kernel corresponding to each of the one or more positions.

For each of the one or more scaled images of the first image, the determining of the sampling position of the convolution kernel corresponding to each of the one or more positions on the scaled image may include: determining the sampling position of the convolution kernel corresponding to each of the one or more positions in a three-dimensional (3D) space according to an imaging model of the first image; and determining the sampling position of the convolutional kernel corresponding to each of the one or more positions in the scaled image, according to the sampling position of the convolutional kernel in the 3D space and the imaging model.

The one or more feature maps may include a plurality of feature maps, and the detecting of the target region in the first image based on the one or more feature maps may include fusing feature maps of adjacent scales in the plurality of feature maps and detecting a target region in the first image based on one or more fused feature maps.

The correcting of the detected target region may include: determining a first feature region corresponding to the detected target region in the feature map of the first image to be a first target region feature map; and generating a transformed first target region feature map by spatially transforming the first target region feature map, and the processing of the object corresponding to the target region based on the corrected target region may include processing the object corresponding to the target region based on the transformed first target region feature map.

The generating of the transformed first target region feature map by spatially transforming the first target region feature map may include: generating a virtual camera corresponding to the target region, according to an imaging model of the first image and the detected target region; and generating the transformed first target region feature map by spatially transforming the first target region feature map with the virtual camera.

The processing of the object corresponding to the target region based on the transformed first target region feature map may include: generating first attribute information of the object corresponding to the target region, based on the transformed first target region feature map; and processing the object corresponding to the target region, according to the first attribute information.

The method may include: generating a second image associated with the first image; and generating second attribute information of the object, based on the second image, and the processing of the object corresponding to the target region according to the first attribute information may include processing the object corresponding to the target region, according to the first attribute information and the second attribute information.

The processing of the object corresponding to the target region may include performing, on the object, any one or any combination of any two or more of object recognition, object segmentation, and object pose estimation.

The first attribute information may include any one or any combination of any two or more of category information of the object, mask information of the object, key point information of the object, and pose information of the object.

The first attribute information may include first key point information of the object and initial pose information of the object, the second attribute information may include second key point information of the object, and the processing of the object corresponding to the target region according to the first attribute information and the second attribute information may include estimating final pose information of the object, based on the initial pose information, the first key point information, and the second key point information.

The generating of the second attribute information of the object based on the second image may include: determining a target region corresponding to the object in the second image, based on the initial pose information, a parameter of a first camera generating the first image and a parameter of a second camera generating the second image; and generating the second key point information of the object, based on the target region corresponding to the object in the second image.

The determining of the target region corresponding to the object in the second image, based on the initial pose information, the parameter of the first camera generating the first image, and the parameter of the second camera generating the second image, may include: determining the initial pose information of the object in a coordinate system of the first camera, based on the initial pose information and the parameter of the first camera; determining the initial pose information of the object in a coordinate system of the second camera, based on the initial pose information of the object in the coordinate system of the first camera and the parameter of the second camera; and determining the target region corresponding to the object in the second image according to the initial pose information of the object in the coordinate system of the second camera.

The generating of the second key point information of the object, based on the target region corresponding to the object in the second image, may include: correcting the target region corresponding to the object in the second image; and generating the second key point information of the object, based on the corrected target region in the second image.

The correcting of the target region corresponding to the object in the second image may include: generating a feature map of the second image; determining, to be a second target region feature map, a second feature region corresponding to the target region in the second image in the feature map of the second image; and generating a transformed second target region feature map by spatially transforming the second target region feature map, and the generating of the second key point information of the object, based on the corrected target region in the second image may include generating the second key point information of the object, based on the transformed second target region feature map.

In another general aspect, one or more embodiments include a non-transitory computer-readable storage medium storing instructions that, when executed by one or more processors, configure the one or more processors to perform any one, any combination, or all operations and methods described herein.

In another general aspect, processor-implemented method with image processing includes: generating a feature map of a first image by performing, using a convolutional neural network, a convolution operation on the first image using a convolution kernel corresponding to each of one or more positions in the first image; and processing an object in the first image, based on the feature map of the first image.

In another general aspect, an apparatus with image processing includes: a processor configured to: generate a feature map of a first image and detect a target region in the first image, based on the feature map; correct the detected target region; and process an object corresponding to the target region, based on the corrected target region.

In another general aspect, a processor-implement method with image processing, the method comprising: generating a plurality of scaled images, each of a different scale, based on a first image; generating a plurality of feature maps based on the scaled images, each of the feature maps corresponding to a corresponding one of the scaled images; fusing two or more of the feature maps; detecting a target region in the first image based on the fused feature maps;

correcting the detected target region using another one of the feature maps; and processing an object corresponding to the target region, based on the corrected target region.

A resolution of the other one of the feature maps may be higher than resolutions of the two or more feature maps.

Other features and aspects will be apparent from the following detailed description, the drawings, and the claims.

BRIEF DESCRIPTION OF THE DRAWINGS

FIG. 1 illustrates an example of an image processing method.
FIG. 2 illustrates an example of a schematic process of extracting a feature of a first image from multiple scales by using a deformable convolutional neural network (CNN) in an image processing method.
FIG. 3 illustrates an example of determining a sampling position of a CNN convolution kernel function that is deformable in an image processing method.
FIG. 4 illustrates an example of fusing multi-scale features in an image processing method.
FIG. 5 illustrates an example of pooling a region of interest that prevents deformation in an image processing method.
FIG. 6 illustrates an example of a schematic process of estimating a pose of an object in an image processing method.
FIG. 7 illustrates an example of a schematic process of processing an image in an image processing method.
FIG. 8 illustrates an example of a schematic process of processing an image in an image processing method.
FIG. 9 illustrates an example of a scenario to which an image processing method is applied.
FIG. 10 illustrates an example of an image processing method.
FIG. 11 illustrates an example of an image processing apparatus.
FIG. 12 illustrates an example of an image processing apparatus.
FIG. 13 is illustrates an example of an electronic device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, devices, and/or systems described herein. However, various changes, modifications, and equivalents of the methods, devices, and/or systems described herein will be apparent after an understanding of the disclosure of this application. For example, the sequences of operations described herein are merely examples, and are not limited to those set forth herein, but may be changed with the exception of operations necessarily occurring in a certain order. Also, descriptions of features that are known after understanding of the disclosure of this application may be omitted for increased clarity and conciseness.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, and/or combinations thereof, but do not preclude the presence or addition of one or more other features, integers, steps, operations, elements, components and/or combinations thereof. As used herein, the term "and/or" includes any one and any combination of any two or more of the associated listed items. The use of the term "may" herein with respect to an example or embodiment (for example, as to what an example or embodiment may include or implement) means that one or more examples or embodiments exists where such a feature is included or implemented, while all examples are not limited thereto.

Unless otherwise defined, all terms including technical and scientific terms used herein have the same meaning as those generally understood consistent with and after an understanding of the present disclosure. It will be further understood that terms, such as those defined in commonly-used dictionaries, should be interpreted as having a meaning that is consistent with their meaning in the context of the relevant art and the present disclosure, and will not be interpreted in an idealized or overly formal sense unless expressly so defined herein.

When describing the examples with reference to the accompanying drawings, like reference numerals refer to like constituent elements and a repeated description related thereto will be omitted. In the description of the embodiments, a detailed description of well-known related structures or functions will be omitted when it is deemed that such description will cause ambiguous interpretation of the present disclosure.

Although terms of "first," "second," and "third" may be used to describe various components, members, regions, layers, or sections, these components, members, regions, layers, or sections are not to be limited by these terms (e.g., "first," "second," and "third"). Rather, these terms are only used to distinguish one component, member, region, layer, or section from another component, member, region, layer, or section. Thus, for example, a "first" component, member, region, layer, or section referred to in examples described herein may also be referred to as a "second" component, member, region, layer, or section, and a "second" component, member, region, layer, or section referred to in examples described herein may also be referred to as the "first" component without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there may be no other elements intervening therebetween. Likewise, similar expressions, for example, "between" and "immediately between," and "adjacent to" and "immediately adjacent to," are also to be construed in the same.

The same name may be used to describe an element included in the examples described above and an element having a common function. Unless otherwise mentioned, the descriptions of the embodiments may be applicable to the following embodiments and thus, duplicated descriptions will be omitted for conciseness.

As mentioned in the description of related art hereof, in a typical image processing method, an object may be greatly stretched in the process of correcting an entire image, leading to a poor effect on a following object processing and a slow processing speed. Conversely, an image processing method of one or more embodiments may improve the effect on processing the object and the image processing speed. For example, the image processing method of one or more embodiments may detect a target region first and then correct only the detected target region to prevent an object from being greatly stretched, may improve an object processing effect, and may speed up an image processing since an irrelevant area is not corrected.

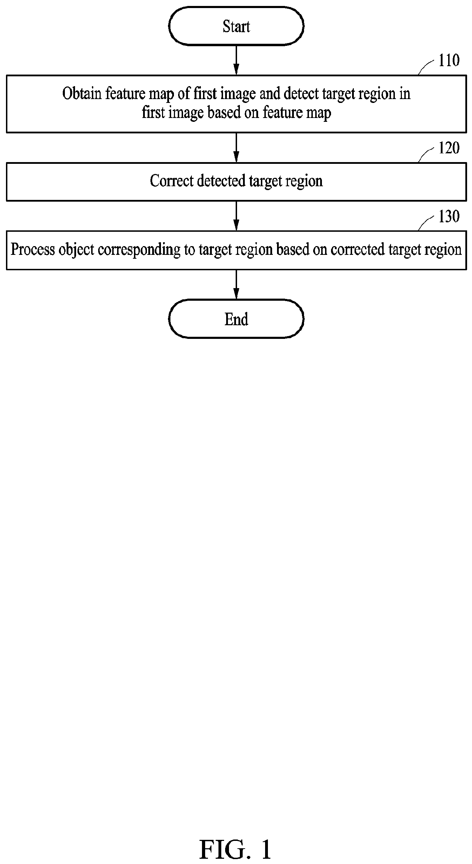

Hereinafter, an example of an apparatus and method for image processing is described in detail with reference to FIGS. 1 to 13.

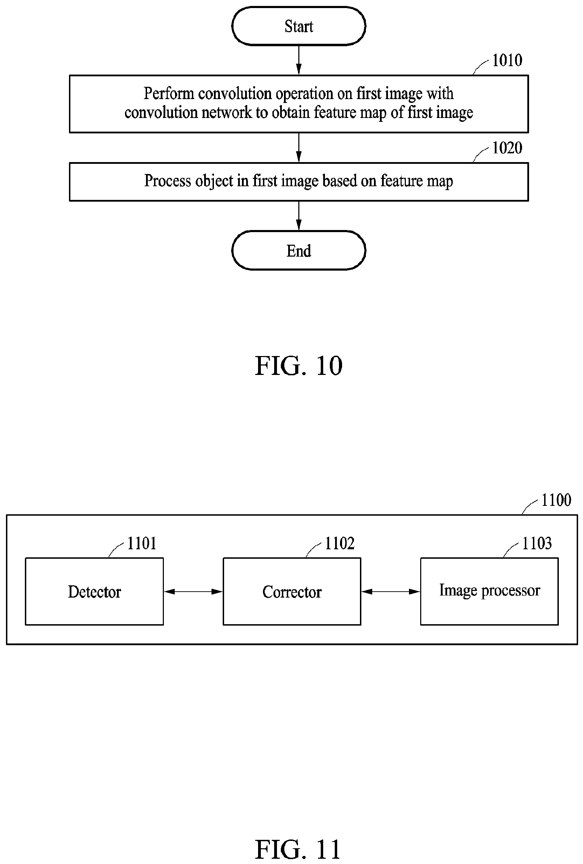

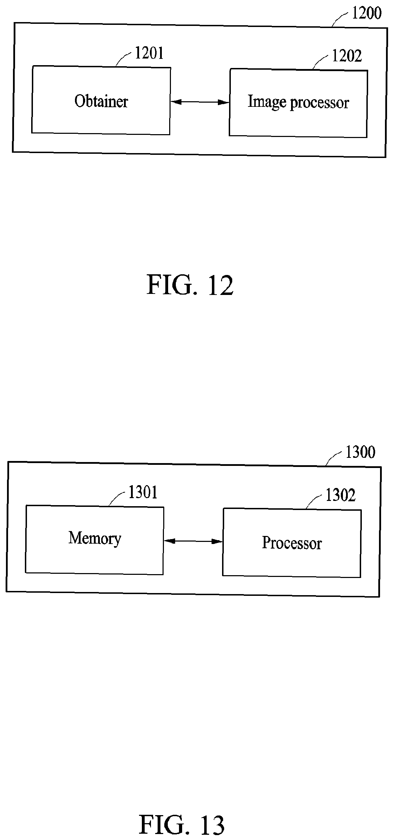

FIG. 1 illustrates an example of an image processing method. Operations 110 through 130 to be described hereinafter may be performed in sequential order, but may not be necessarily performed in sequential order. For example, the operations 110 through 130 may be performed in different orders, and at least two of the operations 110 through 130 may be performed in parallel or simultaneously. Further, one or more of operations 110 through 130 may be omitted, without departing from the scope of the shown examples. The operations 110 through 130 to be described hereinafter with reference to FIG. 1 may be performed by one or more components of an electronic device (e.g., an image processing apparatus 1100 of FIG. 11, an image processing apparatus 1200 of FIG. 12, and/or an electronic device 1300 of FIG. 13) described herein.

Referring to FIG. 1, an image processing method may obtain (e.g., determine or generate) a feature map of a first image and detect a target region in the first image based on the feature map in operation 110. In this case, the target region may be a region of interest (ROI) (e.g., a candidate object region). Here, the first image may be any image having deformation of an object. For example, the first image may be a fisheye image, for example, either one of a left fisheye image and a right fisheye image captured by a fisheye stereo camera, but the first image may not be limited thereto.

In operation 110, the image processing method may extract a feature of the first image from at least one scale (e.g., from at least one scaled image of the first image) to obtain at least one feature map of the first image and detect a target region in the first image, based on the at least one feature map.

A typical image processing method may need to entirely correct the first image prior to extracting a feature from the first image. In contrast, the image processing method of one or more embodiments may directly extract the feature of the first image from each scale. Accordingly, the image processing method of one or more embodiments may avoid time consumption for correcting the entire first image and may improve an accuracy of the extracted feature, compared to the typical image processing method.

The image processing method may obtain a feature map of each scale by performing a convolution operation on the first image with a convolutional neural network. In this case, the convolutional neural network may perform a convolution operation with respect to each position among at least one position on the first image by using a convolution kernel function corresponding to each position. Hereinafter, the convolutional neural network according to one or more embodiments may be described as CNN.

As mentioned above, the first image, such as a fisheye image, may include distortion or deformation of an object. In an image processing method using a typical CNN (where a convolutional kemel function is always fixed), sampling distortion may occur, making the extraction of the feature difficult or inaccurate. However, in contrast, a deformable CNN of the image processing method according to one or more embodiments may perform a convolution operation for each position among at least one position on the first image, by using a convolution kernel function corresponding to each position. Therefore, the image processing method of one or more embodiments may extract a feature more accurately by preventing sampling distortion that occurs when the typical CNN is used for an image having object deformation and thus may improve an object processing effect by using the feature in a subsequent operation. For example, the deformable CNN may extract a feature more accurately and improve the object processing effect on a fisheye image since the deformable CNN may adapt to a change in image resolution of the central region and peripheral region of the fisheye image.

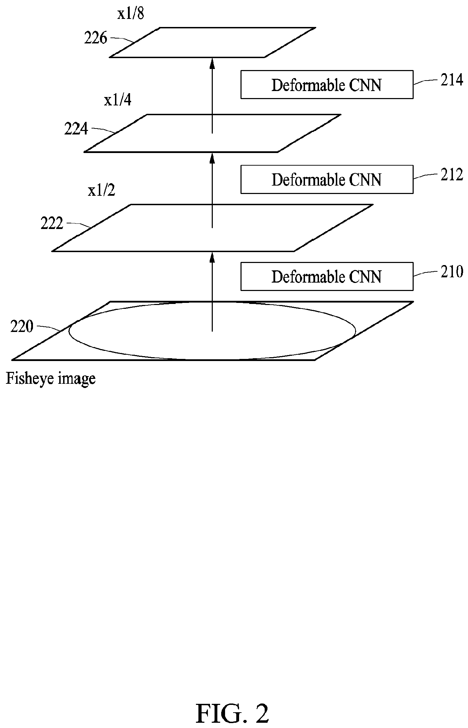

FIG. 2 illustrates an example of a schematic process of extracting a feature of a first image from multiple scales by using a deformable CNN in an image processing method.

In an example of FIG. 2, when the first image is a fisheye image, an image processing method may extract a feature of a first image from three scaled images of the first image corresponding to three scales. In this case, the number of scales may not be limited to three and may be any positive integer of 1 or more. Also, the first image may not be limited to a fisheye image but may be any image having object deformation.

As shown in FIG. 2, the image processing method may extract a feature of a fisheye image by using each of deformable CNNs 21 0, 212, and 214 at each of three scales (e.g., 1/2 scale, 1/4 scale, and 1/8 scale). Correspondingly, a size of a fisheye image 220 may be reduced according to each scale and adjusted, for example, to 1/2 of the size of the first image 220, which is a scaled image 222, 1/4 of the size of the first image 220, which is a scaled image 224, and 1/8 of the size of the first image 220, which is a scaled image 226.

As described above, the deformable CNNs 210, 212, and 214 may perform a convolution operation for each position among at least one position on the first image 220 by using a convolution kernel function corresponding to each position. That is, each position among the at least one position on the first image 220 may correspond to one (e.g., a respective of different) convolutional kernel function. That is, the convolutional kernel function at each position may not be always fixed but may change. The position here may be a pixel point. Therefore, according to one or more embodiments, when the image processing method performs the convolution operation, the image processing method may first obtain a sampling position of the convolution kernel function corresponding to each position among the at least one position on the first image 220. In addition, the image processing method may obtain a feature map of each scale by performing the convolution operation according to the sampling position of the convolution kernel function corresponding to each position.

Here, the sampling position of the convolution kernel function may be determined by an imaging model of the first image 220. For example, at each scale, a sampling position of the convolution kernel function corresponding to each position among at least one position on the first image 220 may be calculated (e.g., determined) in advance according to the imaging model of the first image 220, and the calculated sampling position may be stored in a look up table (LUT). The LUT may be stored in advance and used for performing the convolution operation at each scale to obtain a feature map at each scale. For each scale of a pyramid including the several deformable CNNs 210, 212, and 214 shown in FIG. 2, a sampling position of a convolutional kernel function corresponding to each position among at least one position on the first image 220 of the scales may be all calculated and stored in advance. Accordingly, obtaining the sampling position of the convolution kernel function corresponding to each position among the at least one position on the first image 220 described above may be, for example, obtaining the sampling position of the convolution kernel function corresponding to each position from the LCU stored in advance.

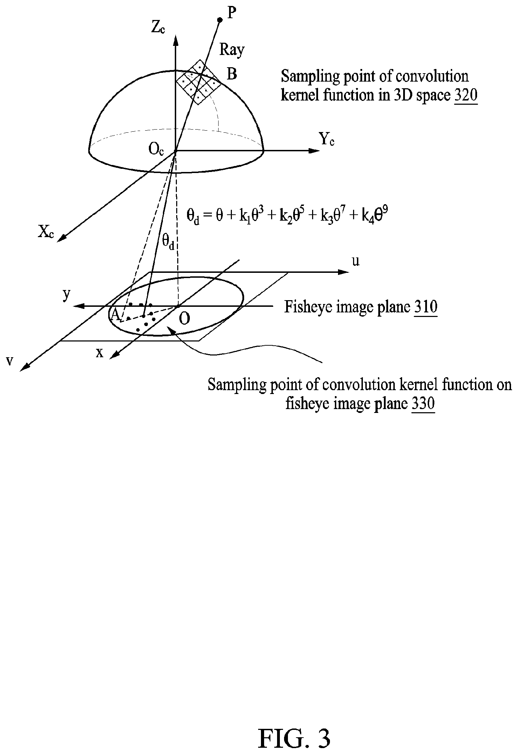

FIG. 3 illustrates an example of determining a sampling position of a CNN convolution kernel function that is deformable in an image processing method.

A method of determining a sampling position of a convolutional kernel function of a deformable CNN is briefly described with reference to FIG. 3.

According to one or more embodiments, an image processing method may determine a sampling position of a convolutional kernel function of each position in a three-dimensional (3D) space according to an imaging model. In addition, the image processing method may determine the sampling position of the convolutional kernel function corresponding to each position in a first image according to the imaging model and the sampling position of the convolutional kernel function in the 3D space.

In an example of FIG. 3, when the first image is a fisheye image, the imaging model may be an imaging model of the fisheye image. Hereinafter, the imaging model of the fisheye image may also be referred to as a "fisheye camera model". As a non-limiting example, the fisheye camera model may be a Kannala-Brandt model.

As shown in FIG. 3, for example, the image processing method may first connect each position on the fisheye image to the optical center of the fisheye camera model (a point Oc in FIG. 3), so as to determine one ray (a straight line connecting the Oc to a pixel point A in FIG. 3). Next, the image processing method may determine whether the ray is generated by the deflection of an incident ray passing through the optical center according to a parameter of the fisheye camera model (also referred to as an "internal parameter of the fisheye camera"). For example, where the fisheye camera model is the Kannala-Brandt model, the incident ray may be determined by Equation 1 below, for example:

Equation 1:

$$\theta_d = \theta + k_1\theta^3 + k_2\theta^5 + k_3\theta^7 + k_4\theta^9$$

Here, $\theta_d$ may denote an angle between a line connecting a pixel position to the optical center and the optical axis of the fisheye camera model (a line where OcZc is located in FIG. 3), $\theta$ may denote an angle between an incident ray and the optical axis of the fisheye camera, and k1 to k4 may denote polynomial coefficients.

When the incident ray is determined, the image processing method may determine an intersection of the incident ray (the ray OcP in FIG. 3) and the fisheye camera model (a point B in FIG. 3). Finally, the image processing method may select a sampling position of a convolutional kernel function in the 3D space, from a 3D local planar grid in contact with the spherical surface of the fisheye camera model through the intersection point. For example, the image processing method may select a set of sampling points with an evenly-spaced uniform sampling, from the 3D local planar grid. As shown in FIG. 3, the image processing method may select a "sampling point 320 of a convolution kernel function in the 3D space" that selects nine sampling points at equal intervals around the intersection point.

In the image processing method, when the sampling position of the convolutional kernel function at each position in the 3D space is determined, the sampling position of the convolutional kernel function in the 3D space through a ray projection according to the fisheye camera model may be mapped to a fisheye image 310, so that the sampling position of the convolution kernel function corresponding to each position of the fisheye image on the fisheye image 310 may be determined. For example, as shown in FIG. 3, the image processing method may map each of the nine sampling points 320 in the 3D space to the fisheye image plane through ray projection according to the Kannala-Brandt model, so as to obtain "the sampling point 330 of the convolution kernel function on the fisheye image plane" corresponding to each of the nine sampling points. These nine sampling points 330 may be sampling positions of the convolution kernel function corresponding to the pixel A to be used for a convolution operation to be performed.

As described above, a non-limiting example method of determining the sampling position of the convolution kernel function corresponding to each position among the at least one position on the first image has been described with reference to FIG. 3. According to one or more embodiments, a feature map of each scale may be obtained by performing a convolution operation according to a sampling position of a convolution kernel function corresponding to each position, using a CNN that is deformable at each scale.

In an example, the at least one feature map may be a plurality of feature maps. In this case, according to one or more embodiments, detecting a target region in the first image based on the at least one feature map may include fusing feature maps of adjacent scales in the plurality of feature maps and detecting a target region based on at least one fused feature map. For example, the target region in the first image may be detected by inputting the feature map to a target region suggestion network. Here, the target region suggestion network may be a pretrained convolutional neural network but the target region suggestion network may not be limited thereto. The target region suggestion network may be trained on the input feature map in advance to detect the target region in the first image.

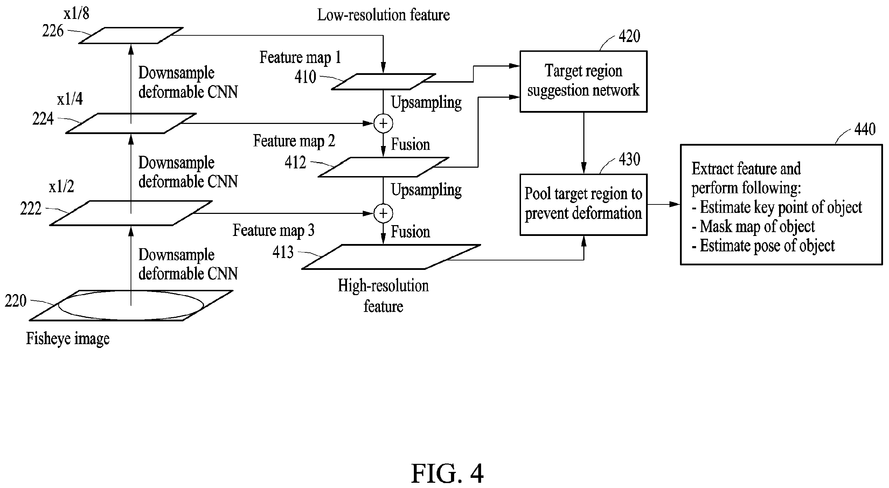

FIG. 4 illustrates an example of fusing multi-scale features in an image processing method.

Referring to FIG. 4, an image processing method may further perform a feature fusion between different scales for multi-scale features extracted by a pyramid-shaped deformable CNN. For example, as shown in FIG. 4, the image processing method may upsample a low-resolution feature map and then fuse the upsampled low-resolution feature map with a high layer feature map of an adjacent scale (for example, addition in units of pixels), so that the fused feature map may include semantic information in a low-resolution feature map and detailed image information in a high-resolution feature map. For example, a feature map 410 may be generated based on the scaled image 226 and a higher layer feature map may be generated based on the scaled image 224, and the image processing method may upsample the feature map 410 and then fuse the upsampled feature map with a higher layer feature map to generate a feature map 412 as the fused feature map. Accordingly, by detecting the target region in the first image based on the at least one fused feature map, the image processing method of one or more embodiments may more accurately detect the target region.

When the features have been fused, the low-resolution feature may be used, for example, for proposing, positioning, and/or classifying an object region, to save computational cost. In addition, the high-resolution feature may ensure an accuracy of estimating detailed properties of the object (e.g., a key point, an object mask map, and/or 6 degrees of freedom (Dof) pose).

For example, to detect a target region in a first image 220 through a target region suggestion network 420, the image processing method of one or more embodiments may use relatively low-resolution feature maps (e.g., a feature map 410 (feature map 1) and a feature map 412 (feature map 2) of FIG. 4) and may not use a feature map with a relatively high resolution (e.g., a feature map 413 (feature map 3) of FIG. 4), thereby further save computational cost. Among the fused feature maps, the feature map with a relatively high resolution (e.g., the feature map 413 (feature map 3) of FIG. 4) may be used for correcting the detected target region (operation 430 of pooling the target region to prevent deformation). In this case, where the target region is an ROI, "pooling the target region to prevent deformation" may also be referred to as "pooling the ROI to prevent deformation". Operation 430 of pooling the target region to prevent deformation may be used for operation 440 of estimating an object pose and the like (e.g., extracting a feature and estimating a key point of an object to be described below, acquiring an object mask map, estimating a pose of an object, and the like).

In the image processing method, when the target region in the first image in operation 110 is detected, the detected target region may be corrected in operation 120. For example, first, the image processing method may determine a first feature region corresponding to the detected target region from the feature map of the first image and use the first feature region as a first target region feature map. Next, where the image processing method spatially transforms the first target feature map, the image processing method may generate a transformed first target region feature map. Where the first target region feature map is spatially transformed, the target region may be corrected. For example, as described above, where feature maps are obtained from multiple scales and the feature maps are fused, the image processing method may determine a first feature region corresponding to the target region detected in a relatively high-resolution feature map (for example, a feature map with a highest resolution among the fused feature maps, that is, the fused feature map with a maximum scale, such as the feature map 413 in an example of FIG. 4) among the fused feature maps. As shown in FIG. 4, the first feature region corresponding to the target region detected in the feature map 413 may be determined and used as a first target region feature map. Where a plurality of target regions are detected, the image processing method may determine a first target region feature map corresponding to each target region. When the first target region feature maps are determined, the image processing method may spatially transform each of the first target region feature maps to correct each target region.

According to one or more embodiments, the image processing method may generate a virtual camera corresponding to a target region, according to an imaging model of the first image and the detected target region, and spatially transform the first target region feature map into the virtual camera to generate a transformed first target region feature map. In the present disclosure, the image processing method may not use the same virtual camera for the entire image or all the target regions but generate a virtual camera corresponding to each detected target region to prevent a shape of an object from being stretched during correction. For example, the image processing method may prevent a shape from sagging, which often occurs at the edge of a viewing angle of a fisheye lens. In addition, when the target region has been pooled to prevent deformation, the first target region feature map may be transformed into the same geometric shape as an existing camera and may be used advantageously for training or estimating a following object processing model.

According to one or more embodiments, a ray corresponding to an optical axis of a virtual camera may be refracted past an imaging model and pass through the center of the detected target region. Also, the optical axis of the virtual camera may point to the optical center of the imaging model.

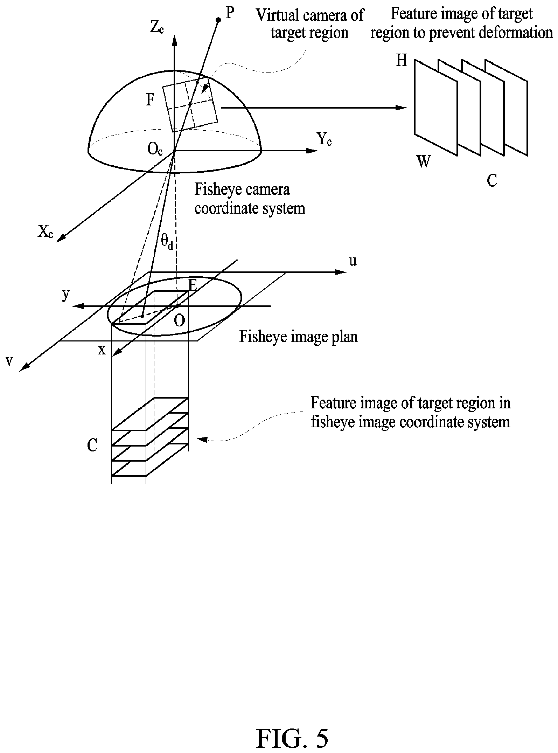

FIG. 5 illustrates an example of pooling an ROI to prevent deformation in an image processing method.

In an example of FIG. 5, when a first image is a fisheye image, an imaging model of the first image may be a fisheye camera model, in an image processing method. As shown in FIG. 5, an optical axis of a virtual camera generated for a target region may be a straight line determined by connecting a point Oc to a point F. A ray corresponding to the straight line may pass through a fisheye camera model (a spherical shape in FIG. 5) and be refracted and then pass through a pixel center of a target region (a point E in FIG. 5). Also, an image plane of a virtual camera of the target region may be in contact with the spherical surface of the fisheye camera model, and the y-axis of the image may be on a plane defined by Zc-Oc-P.

For example, where the image processing method generates a virtual camera, the image processing method may determine a straight line by connecting the point E, which is the pixel center of the target region, to the optical center Oc of the fisheye camera model. Next, the image processing method may determine, according to a parameter of the fisheye camera model, which incident ray has a deflection from which a ray corresponding to the straight line results, among incident rays passing through the optical center. For example, where the fisheye camera model is the Kannala-Brandt model, the incident ray may be determined by Equation 1 described with reference to FIG. 3. Accordingly, a redundant description thereof may be omitted. The straight line corresponding to the incident ray may be the optical axis of the virtual camera. When the optical axis is determined, the image processing method may determine a plane perpendicular to the optical axis to be a plane of the virtual camera. In this case, the plane of the virtual camera may be a plane in contact with the spherical surface of the fisheye camera model but the plane of the virtual camera may not be limited thereto. As shown in FIG. 5, a focal distance f of the virtual camera may be a distance between the optical center Oc and the center F of the virtual camera plane in FIG. 5. The focal distance f of the virtual camera in a planar target region of the virtual camera may be dynamically calculated according to the size of the target region, such that a height H and a width W of a target region feature image to prevent deformation may have fixed sizes.

The image processing method may generate a virtual camera corresponding to each target region, and then spatially transform the first target region feature map of each target region with the generated virtual camera to generate a transformed first region feature map for each target region. For example, the image processing method may obtain the transformed first target region feature map by mapping each feature point in the first target region feature map to points corresponding thereto on the virtual camera plane. For example, the image processing method may determine one ray by connecting each feature point to the optical center of the imaging model and determine an intersection point of an incident ray corresponding to the ray according to the parameter of the imaging model and a virtual camera plane, so as to obtain a transformed first target region feature map according to the intersecting point.

As described above, the image processing method may correct the target region by transforming the first target region feature map.

Further, the image processing method may process an object corresponding to the target region, based on the corrected target region, in operation 130. For example, the object corresponding to the target region may be processed, based on the transformed first target region feature map. For example, the image processing method may obtain first attribute information of the object corresponding to the target region, based on the transformed first target region feature map, and process the object corresponding to the target region, according to the first attribute information. For example, the image processing method may obtain the first attribute information of the object corresponding to the target region, based on the transformed first target region feature map, by using at least one convolutional neural network. For example, the first attribute information may include at least one of object category information, mask information, key point information, and/or pose information but may not be limited thereto. Correspondingly, the image processing method may perform a different processing on the object corresponding to the target region, according to different attribute information. For example, the image processing method may perform at least one of object recognition, object segmentation, and/or object pose estimation with regard to the object. The image processing method may obtain the pose information by using at least one convolutional neural network, based on the transformed first target region feature map. However, when the key point information of the object is obtained, the image processing method may determine the object pose information by using a perspective-n-point (PnP) algorithm and the like.

When the object deformation exists in the first image, the image processing method of one or more embodiments may further improve an accuracy of a result of processing an object by processing the object using another image in addition to the first image. Accordingly, the image processing method of one or more embodiments may further include obtaining a second image associated with the first image and obtaining second attribute information of the object, based on the second image. In this case, processing the object corresponding to the target region according to the first attribute information may include processing the object corresponding to the target region, according to the first attribute information and the second attribute information. Such a method of one or more embodiments may further improve an object processing effect. In this case, the second image may also be a deformed image. As described above, the first image may be either one of a left fisheye image and a right fisheye image. In this case, the second image may be the other one of the left fisheye image and the right fisheye image. According to the image processing method of one or more embodiments, the object may be more accurately processed, based on both the left fisheye image and the right fisheye image. For example, a pose of the object may be more accurately estimated.

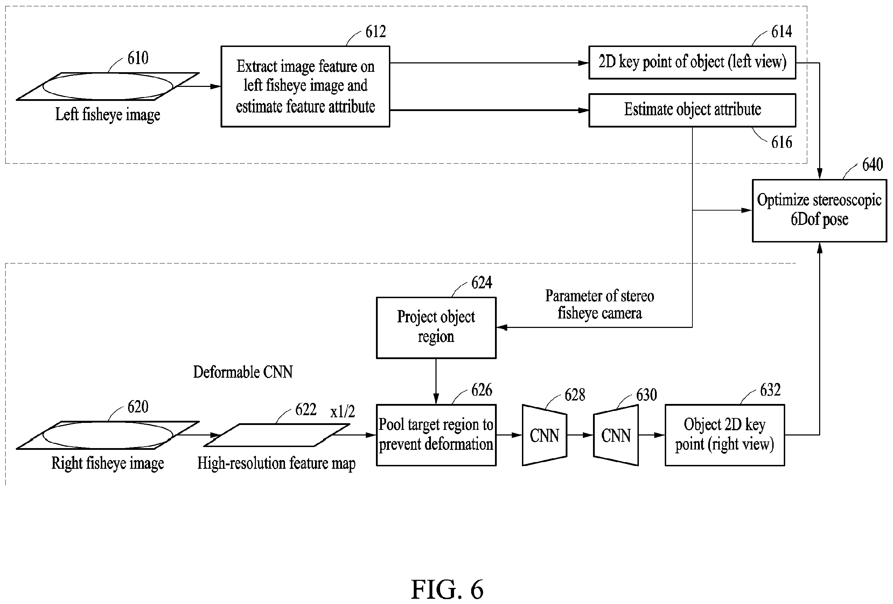

FIG. 6 illustrates an example of a schematic process of estimating a pose of an object in an image processing method.

For example, according to one or more embodiments, for example, first attribute information may, for more accurate estimation of a pose of an object, include first key point information of the object (corresponding to a two-dimensional (2D) key point of the object in the diagram (left view)) and initial pose information (corresponding to an initial object pose of the diagram).

In addition, second attribute information may include second key point information of the object (corresponding to the 2D key point of the object in the diagram (right view)). Processing the object corresponding to the target region, according to the first attribute information and the second attribute information, may include estimating final pose information of the object, based on the first key point information, the initial pose information, and the second key point information (corresponding to optimizing a stereoscopic 6Dof pose of the diagram). For example, the image processing method may determine a target region corresponding to the object in the second image, based on the initial pose information, a parameter of a first camera generating the first image, and a parameter of a second camera generating the second image.

In addition, the image processing method may obtain second key point information of the object by performing an operation of obtaining the second key point information of the object, based on the target region corresponding to the object in the second image. For example, as shown in FIG. 6, where the first image and the second image are a left fisheye image and a right fisheye image, respectively, the image processing method may extract an image feature and estimate object attribute information with regard to a left fisheye image 610 in operation 612 and may obtain a 2D key point 614 of the object and an initial object pose 616. Thereafter, the image processing method may determine a target region corresponding to the object in the right fisheye image, according to the initial object pose 616 and parameters of a stereo fisheye camera, in operation 624 (referred to as "operation 624 of projecting an object region" in FIG. 6). Next, the image processing method may obtain second key point information 632 of the object, based on the target region on a right fisheye image 620. Next, the image processing method may estimate final pose information of the object (e.g.,

optimizing the initial pose information) in operation 640, based on the initial object pose 616, the 2D key point 614 obtained according to the left fisheye image, and the 2D key point 632 obtained according to the right fisheye image. For example, in operation 640, the image processing method may estimate the 6Dof pose of the object.

A goal of estimating the pose of the object may be to estimate a rotation and translation from an object coordinate system to a camera coordinate system. Therefore, the pose information may be closely related to the selection of the camera coordinate system. Where a transformed first target region feature map, which is generated by a virtual camera generated for the target region, is used at the time of estimating the pose of the object, the obtained initial pose information may need to be converted into a real camera again (e.g., a fisheye camera coordinate system) to output the estimated pose information, when the obtained initial pose information is still the information of the virtual camera coordinate system. Alternatively, in a subsequent operation, even where the initial pose information is used in combination with the above-described second key point information for more accurate pose estimation, the initial pose information may need to be converted into the actual camera coordinate system.

Therefore, determining the target region corresponding to the object in the second image, based on the initial pose information, the parameter of the first camera generating the first image, and the parameter of the second camera generating the second image, may include determining the initial pose information of the object in a coordinate system of the first camera, based on the initial pose information and the parameter of the first camera, determining the initial pose information of the object in a coordinate system of the second camera, based on the initial pose information of the object in the coordinate system of the first camera and the parameter of the second camera, and determining the target region corresponding to the object in the second image, according to the initial pose information of the object in the coordinate system of the second camera. That is, the image processing method may convert the initial pose information in the coordinate system of the virtual camera into the initial pose information in the coordinate system of the real camera and then use the initial pose information in the real camera coordinate system to determine the target region corresponding to the object in the second image.

For example, where the first image and the second image are a left fisheye image and a right fisheye image, respectively, the image processing method may project an initial pose of the object estimated based on the left fisheye image onto the right fisheye image and may determine a candidate object region on the right fisheye image. For example, it may be assumed that, in the image processing method, a parameter matrix of a target region virtual camera is Kv and a camera coordinate system of a virtual camera is Ov-XvYvZv. In the image processing method, a camera internal parameter of an image correcting a perspective of a fisheye image may be Kc and a camera coordinate system of the left fisheye camera may be Oc-XcYcZc. The pose information estimated in the coordinate system of the virtual camera in the target region may be expressed as a rotation matrix Rv and a translation vector Tv, and the rotation matrix Rv and the translation vector Tv may be converted into a rotation matrix Rc and a translation vector Tc in the Oc-XcYcZc coordinate system through Equation 2 below, for example.

$$\text{Equation 2:}$$

$$Rc = inv(Kc)*Kv*Rv$$

$$Tc = inv(Kc)*Kv*Tv$$

Here, inv( ) may denote a function of obtaining an inverse of a matrix.

In addition, the image processing method may obtain a rotation transformation and a translation transformation between the left fisheye camera coordinate system and the right fisheye camera coordinate system through the determined external parameters of the two left and right fisheye cameras and then perform the rotation translation and the translation transformation on the object from the left fisheye camera coordinate system to the right fisheye camera coordinate system. Next, the image processing method may use an internal parameter of the right fisheye camera (a parameter of the fisheye image imaging model) to project the object onto an image plane of the right fisheye image and to determine a target region corresponding to the object in the right fisheye image.

As described above, when the target region corresponding to the object in the second image is determined, the image processing method may obtain second key point information of the object, based on the target region corresponding to the object in the second image. For example, when the target region corresponding to the object in the second image is corrected, the image processing method may obtain the second key point information of the object, based on the corrected target region. Optionally, the image processing method may correct the target region corresponding to the object in the second image in the same manner as the target region on the first image is corrected (that is, pooling the target region to prevent the above-described deformation).

Referring to FIG. 6, the image processing method may obtain a feature map 622 of the second image from the right fisheye image 620 and then may determine a second feature region corresponding to the target region in the second image to be a feature map of the second image as a second target region feature map. Next, the image processing method may spatially transform the second target region feature map to generate a transformed second target region feature map in operation 626.

Finally, the image processing method may obtain second key point information of the object in operation 632, based on the transformed second target region feature map.

For example, the image processing method may obtain the feature map of the second image in the same manner as obtaining the feature map of the first image. That is, the image processing method may obtain the feature map of the second image by using a deformable CNN. A duplicate description may be omitted. In addition, optionally, in order to reduce the amount of calculations and ensure an accuracy of extracting the 2D key point information, the feature map of the second image may simply be a feature map with a higher resolution than the second image. For example, as shown in FIG. 6, the image processing method may extract only a high-resolution feature from the right fisheye image to obtain the feature map 622 with a high resolution in order to reduce computational cost and accurately extract the 2D key point feature.

In addition, the image processing method may spatially transform the second target region map to generate a transformed second target region feature map, in the same manner as spatially transforming the first target region map to generate the transformed first target region feature map. In this case, a duplicate description may be omitted.

Similarly, the image processing method may obtain the transformed second target region feature map in operation 626 and then, as shown in FIG. 6, based on the transformed second target region feature map, may obtain information about second key point 632 by using at least one of convolutional neural networks 628 and 630.

When the second key point information is obtained, the image processing method may estimate final pose information of the object in operation 640, based on information about the initial pose 616, information about the first key point 614, and information about the second key point 632. For example, the image processing method may determine the final pose information of the object by minimizing the sum of errors of re-projecting the 2D key point of the object in the two images (the first image and the second image). That is, operation 640 may be to optimize the initial pose. For example, optimization to minimize an error may use a non-linear optimization algorithm, such as a Lev-Mar algorithm. For example, where the first image and the second image are the left fisheye image and the right fisheye image, respectively, estimating the final pose may be expressed by Equation 3 below, for example:

Equation 3:

$$[\hat{R}, \hat{T}] = \underset{[R,T]}{\mathrm{argmin}} \sum_{i=1}^{N} \left( \left\| p_i^{(lv)} - K_v^{(l)} \left[ R_v^{(l)} \ T_v^{(l)} \right] * [P_i; 1]^T \right) \right\|_2^2$$

$$+ \left\| p_i^{(rv)} - K_v^{(r)} \left[ R_v^{(r)} \ T_v^{(r)} \right] * [P_i; 1]^T \right\|_2^2 \right)$$

Here, a rotation matrix R and a translation vector T representing the initial pose information may be defined in a left fisheye coordinate system. Assuming that $[R_{vl\text{-}fl}, T_{vl\text{-}fl}]$ is a transformation from the virtual camera coordinate system of the target region of the left fisheye camera to the left fisheye camera coordinate system, a rotation matrix $R_v^{(l)}$ and a transform vector $T_v^{(l)}$ of the initial pose information in the coordinate system of the left fisheye camera may be expressed as in Equation 4 below, for example.

Equation 4:

$$R_v^{(l)} = \left( R_{vl-fl} \right)^{-1} * R$$

$$T_v^{(l)} = \left( R_{vl-fl} \right)^{-1} * \left( T - T_{vl-fl} \right)$$

Here, the transformation from the virtual camera coordinate system of the target region of the right fisheye camera to the right fisheye camera coordinate system may be [$R_{vr\text{-}fr}$, $T_{vr\text{-}fr}$], and a rotation matrix $R_v^{(r)}$ and a translation

vector $T_v^{(r)}$ of the initial pose information in the right fisheye camera coordinate system may be expressed as in Equation 5 below, for example.

Equation 5:

$$R_v^{(r)} = \left(R_{vr-fr}\right)^{-1} * R^{(r)}$$

$$T_v^{(r)} = \left(R_{vr-fr}\right)^{-1} * \left(T^{(r)} - T_{vr-fr}\right)$$

Here, [$R^{(r)}$, $T^{(r)}$] may represent, in the right fisheye coordinate system, the initial pose information obtained based on the parameters of the rotation and the translation between the initial pose information and the right fisheye camera. Pi may denote a key point defined in the 3D model of the object and may be i=1,..., N. Here, N may denote the number of key points of the object. $p_i^{(lv)}$ may denote a position of an i$^{th}$ key point extracted from the target region virtual camera of the left fisheye image, and $p_i^{(rv)}$ may denote a position of an i$^{th}$ key point extracted from the right fisheye image. In addition, $K_v^{(l)}$ and $K_v^{(r)}$ may denote parameter matrices of the left fisheye camera and the right fisheye camera, respectively.

As described above, the detailed image processing method according to one or more embodiments, that is, the method of estimating the pose of the object, has been described with reference to FIG. 6. The pose of the object may be more accurately estimated by the method of estimating the pose of the object illustrated in FIG. 6.

As described above, the image processing method and an example thereof according to one or more embodiments have been described with reference to FIGS. 1 to 6. The image processing method may improve an image processing speed and an object processing effect.

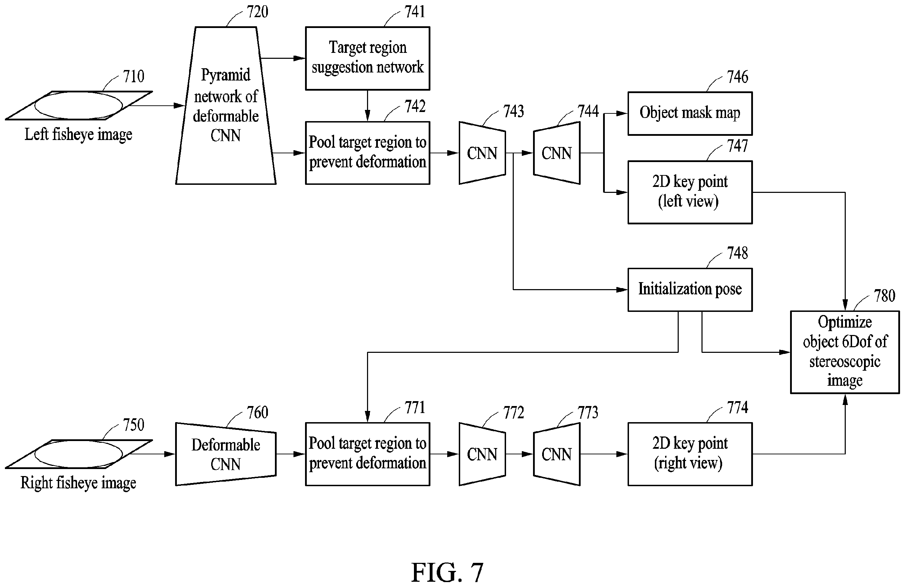

In order for a clearer understanding of the above-described image processing method, the above-described image processing method may be briefly described with reference to FIG. 7.

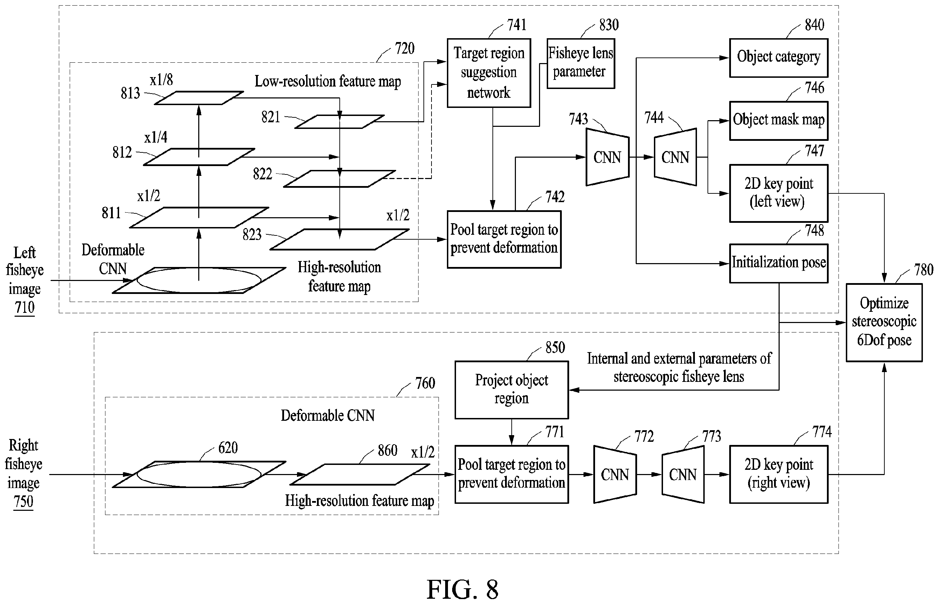

FIG. 7 illustrates an example of a schematic process of processing an image in an image processing method. FIG. 8 illustrates an example of a schematic process of processing an image in an image processing method (e.g., a more detailed diagram of the example of FIG. 7).

In the example of FIG. 7, a first image may be a left fisheye image 710 and a second image may be a right fisheye image 750. An image processing method may obtain a plurality of feature maps, based on the left fisheye image 710, by using a pyramid including the deformable CNN described above (corresponding to a deformable pyramid 720 network in the diagram). For example, as shown in FIG. 8, a size of the left fisheye image 710 may be reduced to 1/2 the size of the first image 220, which is a scaled image 811, 1/4 the size of the first image 220, which is a scaled image 812, and 1/8 the size of the first image 220, which is a scaled image 813, according to each scale.

The image processing method may generate three feature maps 821, 822, and 823 by extracting and fusing features from scaled images 811, 812, and 813, based on the above-described deformable CNN.

The image processing method may detect a target region in the left fisheye image 710 by using a target region suggestion network 741 (e.g., a convolutional neural network and the like), based on the two feature maps 821 and 822 having a low resolution among the three feature maps 821, 822, and 823.

Thereafter, the image processing method may correct the detected object region (referred to as "pooling the target region to prevent deformation in operation 742" in FIG. 7). For example, when a target region feature map corresponding to the target region detected from the fused feature map 823 having a high resolution is determined, the image processing method may spatially transform the target region feature map determined according to a parameter 830 of a fisheye lens (i.e., the parameter of the fisheye image imaging model) and then generate a transformed target region feature map. Thereafter, the image processing method may use at least one of CNNs 743 and 744 to obtain attribute information of the object, such as an object category 840, an object mask map 746, a 2D key point (left view) 747, and an initialization pose 748.

In the example of FIG. 7, the image processing method may obtain key point information (e.g., a 2D key point (right view) 774 of FIG. 7), based on the right fisheye image 750 in order to make the pose of the estimated object more accurate and then may combine the initialization pose 748 obtained according to the left fisheye image 710 and the 2D key point (left view) 747, to estimate a 6Dof pose in operation 780. For example, the image processing method may obtain a feature map of the right fisheye image by using a deformable CNN 760 as shown in FIG. 7. For example, the image processing method may obtain a high-resolution feature map 860 of the right fisheye image by using a deformable CNN as shown in FIG. 8. Furthermore, the image processing method may project an object region in operation 850, based on information about the initialization pose 748 and internal and external parameters 830 of a stereoscopic fisheye lens, so as to determine a target region corresponding to the object in the right fisheye image 750. In addition, the image processing method may correct the target region by pooling the target region to prevent deformation. For example, the image processing method may determine a target region feature map corresponding to the target region from the high-resolution feature map 860 of the right fisheye image 750 and spatially transform the target region feature map to generate a transformed target region feature map in operation 771. The transformed target region feature map may be input to at least one of CNNs 772 and 773 to finally obtain the 2D key point (right view) 774.

Finally, the image processing method may optimize a pose of the object in operation 780, based on the initialization pose 748, the 2D key point (left view) 747 obtained from the left fisheye image, and the 2D key point (right view) 774 obtained from the right fisheye image.

In FIGS. 7 and 8, the image processing method may configure the pyramid 720 for the left fisheye image 710. The feature maps 821 and 822 having a low resolution may be used for the target region suggestion network 741 (i.e., estimating an ROI), and the feature map 823 having a high resolution may be used for accurately extracting the 2D key point (left view) 747. When the image processing method has already estimated the target region in the left fisheye image 710, only a high-resolution feature may be calculated for the right fisheye image 750. As such, the image processing method may effectively reduce the amount of calculations while estimating a pose more accurately when the pose may be estimated based on the combination with the 2D key point information 747. The key point feature may be effective in determining the 6DoF pose of the object. In the example of FIG. 7, a key point may be extracted from the left and right fisheye images, and a pose may be optimally estimated by minimizing a re-projection error of the key point.

Referring to FIGS. 7 and 8, the image processing method may quickly perform a 3D object segmentation and a pose estimation, using a stereo fisheye image. Such technology may be used for a work scenario of recognizing a pose of a 3D object in an environment, such as augmented reality (AR), and requiring interaction. AR may provide a user with a vivid information experience by adding virtual content to a real scene in front of the user. In order to provide a fusion effect with high-quality virtual reality to a user in a 3D space, an AR system may need to have real-time processing and understanding capability with a high precision for the 3D state of surrounding objects. On the other hand, scenarios, such as autonomous driving, segmentation, etc., may require a segmentation and a pose estimation of an object, such as vehicles in the environment.

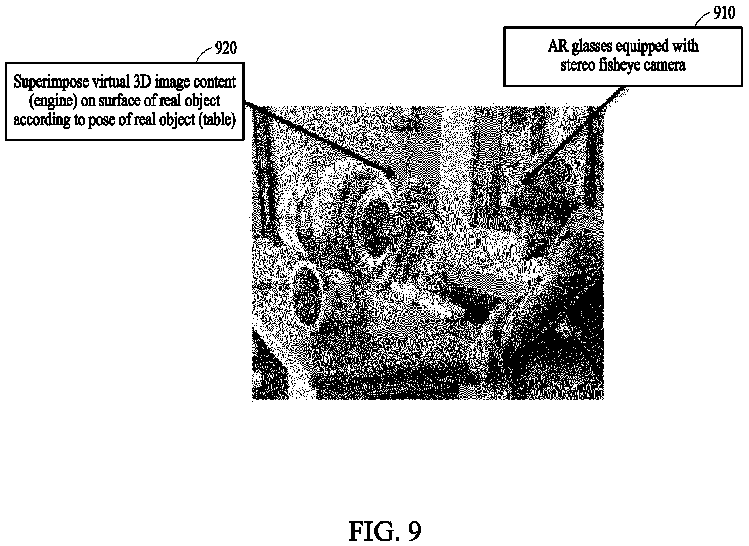

FIG. 9 illustrates an example of a scenario to which an image processing method is applied.

As shown in FIG. 9, in a state in which a user wears AR glasses 910 equipped with a stereo fisheye camera, the image processing method according to one or more embodiments may estimate a 3D pose of a real object (e.g., a table) among stereo fisheye images (a left fisheye image and a right fisheye image), based on the stereo fisheye images. When the 3D pose of the object is estimated, the AR glasses 910 may superimpose virtual 3D graphic content (e.g., an engine) on the surface of the real object, according to the 3D pose of the real object and thus improve an AR experience of the user, in operation 920.

In the description of the image processing method of FIG 1, using the deformable CNN to obtain the feature map of the first image by extracting the feature of the first image, detecting the target region in the first image based on the obtained feature map, and processing the object after correcting the target region, based on the corrected target region, has been described. However, the image processing method may extract a feature of an object having deformation by using the deformable CNN to obtain the feature map and then may directly process the object based on the obtained feature map. That is, the image processing method of one or more embodiments may perform object processing by solely using the deformable CNN described above, thereby avoiding a time consumption to correct an entire image having object deformation in the related art and may use the deformable CNN to prevent sampling distortion that occurs when an image with object deformation is extracted with a typical CNN. Accordingly, the image processing method may extract an image feature more accurately and improve an effect on following object processing.

Accordingly, according to one or more embodiments, an image processing method illustrated in FIG. 10 may also be provided.

FIG. 10 illustrates an example of an image processing method. Operations 1010 and 1020 to be described hereinafter may be performed in sequential order, but may not be necessarily performed in sequential order. For example, the operations 1010 and 1020 may be performed in different orders, and at least two of the operations 1010 and 1020 may be performed in parallel or simultaneously. Further, one or more of operations 1010 and 1020 may be omitted, without departing from the scope of the shown examples. The operations 1010 and 1020 to be described hereinafter with reference to FIG. 10 may be performed by one or more components of an electronic device (e.g., an image processing apparatus 1100 of FIG. 11, an image processing apparatus 1200 of FIG. 12, and/or an electronic device 1300 of FIG. 13) described herein.

Referring to FIG. 10, an image processing method may perform a convolution operation on a first image by using a convolutional neural network and obtain a feature map of the first image, in operation 1010. In this case, the convolutional neural network may perform a convolution operation with respect to each position among at least one position on the first image by using a convolution kernel function corresponding to each position. For example, the first image may be an image in which deformation of an object exists.

For example, in operation 1010, the image processing method may obtain a sampling position of the convolution kernel function corresponding to each position among the at least one position on the first image. Here, the sampling position of the convolution kernel function may be determined according to an imaging model of the first image. Next, the image processing method may obtain a feature map by performing the convolution operation according to the sampling position of the convolution kernel function corresponding to each position. For example, the sampling position of the convolution kernel function may determine the sampling position of the convolution kernel function of each position in a 3D space according to the imaging model and may determine the sampling position of the convolution kernel function corresponding to each position on the first image, according to the sampling position of the convolution kernel function in the 3D space and the imaging model. Since the operations performed by the deformable CNN have been described in detail in the above description, a redundant description thereof may be omitted.

The image processing method may process the object in the first image, based on the feature map, in operation 1020. As described above, the image processing method may obtain a feature map, detect a target region of the first image based on the feature map, correct the detected target region, and process an object corresponding to the target region, based on the corrected target region. Since the detailed operations have been described in the image processing method of FIG. 1, a redundant description thereof may be omitted.

The image processing method shown in FIG. 10 may reduce the time consumption to correct an entire image and avoid sampling distortion that occurs when an image is extracted with a typical CNN, so that the image may be more accurately extracted and an effect of following image processing may be improved.

FIG. 11 illustrates an example of an image processing apparatus.

Referring to FIG. 11, an image processing apparatus 1100 may include a detector 1101, a corrector 1102, and an image processor 1103. For example, the detector 1101 may obtain a feature map of a first image and detect a target region in the first image, based on a feature map. The corrector 1102 may correct the detected target region. The image processor 1103 may process an object corresponding to the target region, based on the corrected target region.

The image processing method illustrated in FIG. 1 may be executed by the image processing apparatus 1100 illustrated in FIG. 11, the detector 1101 may perform operation 110, the corrector 1102 may perform operation 120, and the image processor 1103 may perform operation 130. Since details related to the operations performed by the detector 1101, the corrector 1102, and the image processor 1103 of FIG. 11 may be refer to the description of FIG. 1, a redundant description thereof may be omitted.

FIG. 12 illustrates an example of an imaging processing apparatus.

Referring to FIG. 12, an image processing apparatus 1200 may include an obtainer 1201 and an image processor 1202.

For example, the obtainer 1201 may perform a convolution operation on a first image by using a convolutional neural network to obtain a feature map of the first image. Here, the convolutional neural network may perform a convolution operation with respect to each position among at least one position on the first image by using a convolution kernel function corresponding to each position.

The image processor 1202 may process an object in the first image, based on the feature map.

The image processing method illustrated in FIG. 10 may be performed by the image processing apparatus 1200 illustrated in FIG. 12. The obtainer 1201 may perform operation 1010, and the image processor 1202 may perform operation 1020.

Detailed descriptions of the operations performed by the obtainer 1201 and the image processor 1202 of FIG. 12 may be referred to in the description of FIG. 10, and a redundant description thereof may be omitted.

In addition, although it has been separately described that each of the constituent elements performs processing corresponding to each of them in the image processing apparatus 1100 and the image processing apparatus 1200, it may be apparent that processing performed by each of the constituent elements may be completed, even where the image processing apparatus 1100 and the image processing apparatus 1200 are not divided into a certain constituent element or there is no clear boundary between the constituent elements. In addition, the image processing apparatus 1100 and the image processing apparatus 1200 may further include other constituent elements, for example, a storage.

FIG. 13 illustrates an example of an electronic device.

Referring to FIG. 13, an electronic device 1300 may include a memory 1301 (e.g., one or more memories) and a processor 1302 (e.g., one or more processors). The memory 1301 may store computer-executable instructions, and the processor 1302 may execute the computer-executable instructions, thereby configuring the processor 1302 to execute an image processing method according to one or more embodiments. The memory 1301 may be or include a non-transitory computer-readable storage medium storing instructions that, when executed by the processor 1302, configure the processor 1302 to perform any one, any combination, or all of the operations and methods described herein with references to FIGS. 1 to 12. The processor 1302 may perform any one, any combination, or all of the operations and methods described herein with references to FIGS. 1 to 12. The above-described image processing method may be performed by using an artificial intelligence (AI) model.

At least one of the above-described various configurations may be implemented through the AI model. AI-related functions may be performed by a non-volatile memory, a volatile memory, and a processor.

At this time, the at least one processor 1302 may be general-purpose processors, such as a central processing unit (CPU) and an application processor (AP), or graphics processors, such as a graphics processing unit (GPU) and a vision processing unit (VPU), and/or dedicated AI processors, such as a neural processing unit (NPU).

The at least one processor 1302 may control processing of input data based on a predefined operation rule or AI model stored in the non-volatile memory and the volatile memory. The at least one processor 1302 may provide a predefined operation rule or AI model through training or learning. Herein, the providing of the predefined operation rule or AI model through learning may indicate obtaining a predefined operation rule or AI model with desired characteristics by applying a learning algorithm to a plurality of pieces of training data. The learning may be performed by a device having an AI function according to one or more embodiments, and/or implemented by a separate server and/or system.

A learning algorithm may be a method of getting, allowing, or controlling a predetermined target device (e.g., a robot) to determine or estimate a target device by using data of multi training. The learning algorithm may include, but is not limited to, for example, supervised learning, unsupervised learning, semi-supervised learning, or reinforcement learning.

In the image processing method performed by an electronic device of the present disclosure, when a target region is processed, an output image may be obtained by using an input image as input data of an AI model.

The AI model may be obtained through training. Here, "being obtained through training" may refer to obtaining a predefined operation rule or AI model that is configured to perform a desired feature (or objective) by training a basicAI model with a plurality of sets of training data through a training algorithm.

For example, the AI model may include a plurality of neural network layers. Each of the plurality of neural network layers may include a plurality of weight values, and a neural network computation may be performed by a calculation between a calculation result from a previous layer and the plurality of weight values. A neural network may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), a generative adversarial network (GAN), and/or a deep Q network, but is not limited thereto.

For example, an electronic device may be a personal computer (PC), a tablet device, a personal digital assistant (PDA), a smartphone, and/or other devices capable of executing the above instruction set. Here, the electronic device may not need to be a single electronic device and may be any device or assembly of a circuit capable of executing the above instructions (or an instruction set) alone or jointly. The electronic device may also be a part of an integrated control system or a system administrator or may be configured as a portable electronic device interconnected to a local or remote (e.g., via wireless transmission) interface.

The image processing apparatuses, detectors, correctors, image processors, image processing apparatuses, obtainers, electronic devices, memories, processors, image processing apparatus 1100, detector 1101, corrector 1102, image processor 1103, image processing apparatus 1200, obtainer 1201, image processor 1202, electronic device 1300, memory 1301, processor 1302, and other apparatuses, units, modules, devices, and components described herein with respect to FIGS. 1-13 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13 that perform the operations described in this application are performed by computing hardware, for example, by one or more processors or computers, implemented as described above executing instructions or software to perform the operations described in this application that are performed by the methods. Forexample, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims.

**Claims**

1. A processor-implement method with image processing, the method comprising:

   generating a feature map of a first image and detecting a target region in the first image based on the feature map;
   correcting the detected target region; and
   processing an object corresponding to the target region, based on the corrected target region.

2. The method of claim 1, wherein

   the generating of the feature map of the first image comprises generating one or more feature maps of the first image by extracting a feature of the first image from one or more scaled images of the first image; and
   the detecting of the target region in the first image comprises detecting a target region in the first image based on the one or more feature maps.

3. The method of claim 2, wherein

   the generating of the one or more feature maps of the first image by extracting the feature of the first image from the one or more scaled images comprises generating a feature map at each of one or more scales by performing a convolution operation on each of the one or more scaled images with a convolutional neural network, and
   for each of the one or more scaled images of the first image, the convolutional neural network is configured to perform the convolution operation on each of one or more positions on the scaled image by using a convolution kernel corresponding to each of the one or more positions.

4. The method of claim 3, wherein the generating of the feature map at each of the one or more scales by performing the convolution operation on each of the one or more scaled images with the convolutional neural network comprises:

   determining a sampling position of the convolution kernel corresponding to each of the one or more positions on the one or more scaled images; and
   generating the feature map at each of the one or more scales by performing the convolution operation according to the sampling position of the convolution kernel corresponding to each of the one or more positions.

5. The method of claim 4, wherein, for each of the one or more scaled images of the first image, the determining of the sampling position of the convolution kernel corresponding to each of the one or more positions on the scaled image comprises:

   determining the sampling position of the convolution kernel corresponding to each of the one or more positions in a three-dimensional, 3D, space according to an imaging model of the first image; and
   determining the sampling position of the convolutional kernel corresponding to each of the one or more positions in the scaled image, according to the sampling position of the convolutional kernel in the 3D space and the imaging model.

6. The method of claim 2, wherein

   the one or more feature maps comprises a plurality of feature maps, and
   the detecting of the target region in the first image based on the one or more feature maps comprises fusing feature maps of adjacent scales in the plurality of feature maps and detecting a target region in the first image based on one or more fused feature maps.

7. The method of one of claims 1 to 6, wherein
   the correcting of the detected target region comprises:

   determining a first feature region corresponding to the detected target region in the feature map of the first image to be a first target region feature map; and
   generating a transformed first target region feature map by spatially transforming the first target region feature map, and
   the processing of the object corresponding to the target region based on the corrected target region comprises processing the object corresponding to the target region based on the transformed first target region feature map.

8. The method of claim 7, wherein the generating of the transformed first target region feature map by spatially transforming the first target region feature map comprises generating a virtual camera corresponding to the target region, according to an imaging model of the first image and the detected target region; and generating the transformed first target region feature map by spatially transforming the first target region feature map with the virtual camera, or wherein the processing of the object corresponding to the target region based on the transformed first target region feature map comprises generating first attribute information of the object corresponding to the target region, based on the transformed first target region feature map; and processing the object corresponding to the target region, according to the first attribute information.

9. The method of claim 8, further comprising generating a second image associated with the first image; and generating second attribute information of the object, based on the second image, and wherein the processing of the object corresponding to the target region according to the first attribute information comprises processing the object corresponding to the target region, according to the first attribute information and the second attribute information, or

    wherein the processing of the object corresponding to the target region comprises performing, on the object, any one or any combination of any two or more of object recognition, object segmentation, and object pose estimation, or
    wherein the first attribute information comprises any one or any combination of any two or more of category information of the object, mask information of the object, key point information of the object, and pose information of the object.

10. The method of claim 9, wherein

    the first attribute information comprises first key point information of the object and initial pose information of the object,
    the second attribute information comprises second key point information of the object, and
    the processing of the object corresponding to the target region according to the first attribute information and the second attribute information comprises estimating final pose information of the object, based on the initial pose information, the first key point information, and the second key point information, and
    wherein the generating of the second attribute information of the object based on the second image comprises:

        determining a target region corresponding to the object in the second image, based on the initial pose information, a parameter of a first camera generating the first image and a parameter of a second camera generating the second image; and
        generating the second key point information of the object, based on the target region corresponding to the object in the second image.

11. The method of claim 10, wherein the determining of the target region corresponding to the object in the second image, based on the initial pose information, the parameter of the first camera generating the first image, and the parameter of the second camera generating the second image, comprises:

    determining the initial pose information of the object in a coordinate system of the first camera, based on the initial pose information and the parameter of the first camera;
    determining the initial pose information of the object in a coordinate system of the second camera, based on the initial pose information of the object in the coordinate system of the first camera and the parameter of the second camera; and
    determining the target region corresponding to the object in the second image according to the initial pose information of the object in the coordinate system of the second camera.

12. The method of claim 10, wherein the generating of the second key point information of the object, based on the target region corresponding to the object in the second image, comprises:

    correcting the target region corresponding to the object in the second image; and
    generating the second key point information of the object, based on the corrected target region in the second image, and
    wherein the correcting of the target region corresponding to the object in the second image comprises:

generating a feature map of the second image;

determining, to be a second target region feature map, a second feature region corresponding to the target region in the second image in the feature map of the second image; and

generating a transformed second target region feature map by spatially transforming the second target region feature map, and

the generating of the second key point information of the object, based on the corrected target region in the second image comprises generating the second key point information of the object, based on the transformed second target region feature map.

13. A non-transitory computer-readable storage medium storing instructions that, when executed by a processor, configured the processor to perform an image processing method, the method comprising:

generating a feature map of a first image by performing, using a convolutional neural network, a convolution operation on the first image using a convolution kernel corresponding to each of one or more positions in the first image; and

processing an object in the first image, based on the feature map of the first image.

14. An apparatus with image processing, the apparatus comprising:
a processor configured to:

generate a feature map of a first image and detect a target region in the first image, based on the feature map;

correct the detected target region; and

process an object corresponding to the target region, based on the corrected target region.

15. The apparatus of claim 14 configured to perform the method of one of claims 2 to 12.

```
                          ╭─────────────╮
                          │    Start     │
                          ╰─────────────╯
                                 │
                                 ▼                    ╭ 110
        ┌────────────────────────────────────────────────────┐
        │  Obtain feature map of first image and detect target region in │
        │          first image based on feature map          │
        └────────────────────────────────────────────────────┘
                                 │
                                 ▼                    ╭ 120
        ┌────────────────────────────────────────────────────┐
        │              Correct detected target region              │
        └────────────────────────────────────────────────────┘
                                 │
                                 ▼                    ╭ 130
        ┌────────────────────────────────────────────────────┐
        │  Process object corresponding to target region based on corrected target region │
        └────────────────────────────────────────────────────┘
                                 │
                                 ▼
                          ╭─────────────╮
                          │     End      │
                          ╰─────────────╯
```

# FIG. 1

x1/8

226

Deformable CNN — 214

x1/4

224

Deformable CNN — 212

x1/2

222

Deformable CNN — 210

220

Fisheye image

FIG. 2

P

$Z_c$

Ray

B

Sampling point of convolution
kernel function in 3D space 320

$Y_c$

$O_c$

$X_c$

$\theta_d$

$\theta_d = \theta + k_1\theta^3 + k_2\theta^5 + k_3\theta^7 + k_4\theta^9$

u

y

Fisheye image plane 310

A

O

x

v

Sampling point of convolution kernel function on
fisheye image plane 330

## FIG. 3

FIG. 4

P

Virtual camera of target region

Feature image of target region to prevent deformation

Fisheye camera coordinate system

Fisheye image plan

Feature image of target region in fisheye image coordinate system

FIG. 5

FIG. 6

25

FIG. 7

Left fisheye image — 710
Pyramid network of deformable CNN — 720
Target region suggestion network — 741
Pool target region to prevent deformation — 742
CNN — 743
CNN — 744
Object mask map — 746
2D key point (left view) — 747
Initialization pose — 748
Optimize object 6Dof of stereoscopic image — 780
Right fisheye image — 750
Deformable CNN — 760
Pool target region to prevent deformation — 771
CNN — 772
CNN — 773
2D key point (right view) — 774

FIG. 8

FIG. 9

Start

1010

Perform convolution operation on first image with
convolution network to obtain feature map of first image

1020

Process object in first image based on feature map

End

FIG. 10

1100

1101

Detector

1102

Corrector

1103

Image processor

FIG. 11

1200

1201

Obtainer

1202

Image processor

# FIG. 12

1300

1301

Memory

1302

Processor

# FIG. 13

Europäisches
Patentamt

European
Patent Office

Office européen
des brevets

# EUROPEAN SEARCH REPORT

Application Number

EP 22 20 9621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOPH HEINDL ET AL: "Large Area 3D Human Pose Detection Via Stereo Reconstruction in Panoramic Cameras", ARXIV.ORG, CORNELL UNIVERSITY LIBRARY, 201 OLIN LIBRARY CORNELL UNIVERSITY ITHACA, NY 14853, 1 July 2019 (2019-07-01), XP081387817, | 1,7-12, 14,15 | INV. G06T5/00 G06T7/73 G06V10/00 G06V20/00 |
| Y | * the whole document * | 2-4,13 | |
| A | | 5,6 | |
| | ----- | | |
| Y | Pettersson Ludvig ET AL: "Object detection in top-view fisheye images using convolutional neural networks", , 2019, XP093041032, Retrieved from the Internet: URL:https://lup.lub.lu.se/luur/download?fu nc=downloadFile&recordOId=9024529&fileOId= 9024534 [retrieved on 2023-04-21] * page 2 - page 7 * * page 67 - page 69 * | 2-4,13 | |
| | ----- | | TECHNICAL FIELDS SEARCHED (IPC) |
| A | US 2015/220810 A1 (MASE RYOTA [JP]) 6 August 2015 (2015-08-06) * paragraph [0001] - paragraph [0012] * * paragraph [0102] - paragraph [0109] * * paragraph [0119] - paragraph [0133] * | 1-15 | G06T G06V |
| | ----- | | |

The present search report has been drawn up for all claims

| Place of search | Date of completion of the search | Examiner |
|---|---|---|
| Munich | 21 April 2023 | Maier, Werner |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                            
& : member of the same patent family, corresponding
   document

EPO FORM 1503 03.82 (P04C01)

# EP 4 187 483 A1

## ANNEX TO THE EUROPEAN SEARCH REPORT
## ON EUROPEAN PATENT APPLICATION NO.

EP 22 20 9621

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2023

| Patent document cited in search report | | Publication date | Patent family member(s) | | Publication date |
|---|---|---|---|---|---|
| US 2015220810 A1 | | 06-08-2015 | CN 104584071 A | | 29-04-2015 |
| | | | EP 2889834 A1 | | 01-07-2015 |
| | | | JP 6278276 B2 | | 14-02-2018 |
| | | | JP WO2014030400 A1 | | 28-07-2016 |
| | | | TW 201415380 A | | 16-04-2014 |
| | | | US 2015220810 A1 | | 06-08-2015 |
| | | | WO 2014030400 A1 | | 27-02-2014 |

EPO FORM P0459

For more details about this annex : see Official Journal of the European Patent Office, No. 12/82